# FASCICULE DE BREVET EUROPEEN

(11) **EP 1 999 401 B1**
(45) Date de publication et mention de la délivrance du brevet: **30.09.2009**
(21) Numéro de dépôt: 07731739.4
(22) Date de dépôt: 14.03.2007
(51) Int. Cl.: F16K 13/00, F16K 3/04, F16K 27/04, A61M 16/00, F16K 43/00

(54) **DISPOSITIF DE DÉRIVATION POUR CIRCUIT DE FLUIDE ET CIRCUIT COMPORTANT UN TEL DISPOSITIF**
BYPASS-VORRICHTUNG FÜR FLUIDKREISLAUF UND DIESE UMFASSENDER KREISLAUF
BYPASS DEVICE FOR FLUID CIRCUIT AND CIRCUIT COMPRISING SAME

(30) Priorité: 20.03.2006 FR 0650946
(43) Date de publication de la demande: 10.12.2008
(73) Titulaire: Air Liquide Santé (International), 75007 Paris (FR); Air Liquide Santé France, 75007 Paris (FR); Vögtlin Instruments AG, 4147 Aesch (BL) (CH)
(72) Inventeur: CHEVALIER, Gilbert, F-78960 Voisins Le Bretonneux (FR); GUIBERTEAU, Bertrand, F-78170 La Celle Saint Cloud (FR); WALTZ, Fabian, CH-4054 Bale (CH); WALTZ, Lothar, CH-4053 Basel (CH)
(74) Mandataire: De Cuenca, Emmanuel Jaime
(86) Numéro de dépôt international: PCT/FR2007/050923
(87) Numéro de publication internationale: WO 2007/107661

(56) Documents cités:
- DE-U1- 20 108 644
- FR-A- 1 391 895
- GB-A- 2 226 103
- US-A- 4 019 535
- US-A- 5 026 027

## Description

La présente invention concerne un dispositif de dérivation pour circuit de fluide ainsi qu'un circuit comportant un tel dispositif.

L'invention concerne plus particulièrement un dispositif de dérivation pour circuit de fluide, notamment pour circuit de gaz, comprenant deux tronçons distincts de circulation de fluide pourvus chacun d'une extrémité amont et d'une extrémité aval, l'extrémité amont de chaque tronçon de circulation de fluide étant apte à être mise en communication fluidique avec une entrée de fluide d'un circuit, l'extrémité aval de chaque tronçon étant apte à être mise en communication fluidique avec une sortie de fluide d'un circuit, comme décrit, par exemple, en GB 2 226 103 A.

Certaines fournitures de fluides, comme par exemple en milieu hospitalier, ne peuvent être interrompues sans risques. La mise en oeuvre de procédures rigoureuses permet tout de même d'intervenir sur un réseau de fluide tout en assurant une fourniture ininterrompue des fluides.

Dans le cas, par exemple, où un capteur de débit est inséré dans une branche d'un réseau de fourniture de gaz (oxygène, air, protoxyde d'azote ou autre), tout entretien du capteur de débit nécessite la mise en place et l'utilisation d'une dérivation ou bi-passe. De telles dérivations comportent classiquement trois vannes d'isolement.

L'ouverture du bi-passe et la fermeture des vannes d'isolement autorise le démontage du débitmètre. Toutefois, ces opérations ne sont pas sans risques d'erreur. En effet, la non-ouverture du bi-passe ou l'oubli de fermeture d'une vanne d'isolement provoque inévitablement une coupure d'alimentation de fluide. En outre, les opérations de démontage du capteur peuvent être longues et sollicitent les connecteurs du système.

Un but de la présente invention est de pallier tout ou partie des inconvénients de l'art antérieur relevés ci-dessus.

A cette fin, le dispositif de dérivation selon l'invention, par ailleurs conforme à la définition générique qu'en donne le préambule ci-dessus, est essentiellement caractérisé en ce que chaque tronçon de circulation est monté mobile relativement à une base fixe entre une première position dans laquelle les extrémités amont et aval dudit tronçon sont en communication fluidique avec respectivement l'entrée et la sortie de fluide, et une seconde position escamotée dans laquelle les extrémités amont et aval dudit tronçon ne sont pas sont en communication fluidique avec respectivement l'entrée et la sortie de fluide.

Par ailleurs, l'invention peut comporter l'une ou plusieurs des caractéristiques suivantes :
- les deux tronçons de circulation sont liés par un élément de couplage de mouvement relativement à la base entre une première position de travail dans laquelle les extrémités amont et aval d'un premier tronçon sont en communication fluidique avec respectivement l'entrée et la sortie de fluide, et une seconde position de dérivation dans laquelle les extrémités amont et aval du second tronçon sont en communication fluidique avec respectivement l'entrée et la sortie de fluide,
- le dispositif comporte un organe de maintien amovibles des tronçons en position de travail et/ou en position de dérivation tel qu'au moins un loquet ou une vis de maintien,
- les deux tronçons sont agencés relativement à la base de façon que le déplacement d'un tronçon depuis sa position de travail vers sa position escamotée provoque simultanément le déplacement du second tronçon depuis sa position escamotée vers sa position de travail et inversement,
- les deux tronçons sont agencés relativement à la base de sorte que, entre la position de travail et la position de dérivation, les deux tronçons passent par au moins une position intermédiaire dans laquelle les extrémités amont des deux tronçons sont simultanément en communication fluidique avec l'entrée et les extrémités avant des deux-tronçons sont simultanément en communication fluidique avec la sortie de fluide,
- les tronçons sont montés mobile en rotation relativement à la base,
- la base comprend deux flancs, les extrémités amont des deux tronçons étant connectées à un premier flanc, les extrémités aval des deux tronçons étant connectées au second flanc,
- chaque flanc comprend un orifice destiné à être connecté à une entrée, respectivement une sortie d'un circuit de fluide, et des éléments d'étanchéité tels qu'un joint torique ou autre destinés à assurer l'étanchéité entre l'orifice et les extrémités correspondantes des tronçons,
- l'un au moins des tronçons comporte un appareillage tel qu'un capteur de débit et/ou de pression apte à coopérer avec le flux de fluide traversant ledit tronçon,
- l'un au moins des tronçons est apte à être désolidarisé en vue de son retrait du dispositif,
- la base et les tronçons sont conformés relativement de façon à empêcher la désolidarisation et le retrait d'un tronçon lorsque ledit tronçon n'est pas en position escamotée.

D'autres particularités et avantages apparaîtront à la lecture de la description ci-après, faite en référence aux figures dans lesquelles :
- la figure 1 représente une vue en perspective et schématique d'un dispositif de dérivation selon l'invention dans une première position d'utilisation dite de travail,
- la figure 2 représente une vue en coupe transversale du dispositif de dérivation, selon la ligne AA de la figure 1,
- la figure 3 représente une vue en perspective et schématique du dispositif de dérivation dans une seconde position dite intermédiaire,
- la figure 4 représente une vue en en coupe transversale du dispositif de dérivation, selon la ligne BB de la figure 2,
- la figure 5 représente une vue en perspective et schématique du dispositif de dérivation dans une troisième position dite de dérivation,
- la figure 6 représente une vue en en coupe transversale du dispositif de dérivation, selon la ligne CC de la figure 5,
- la figure 7 représente une vue en perspective et schématique du dispositif de dérivation dans sa position dite de dérivation et dans laquelle un organe de mesure porté par le dispositif de dérivation est retiré.
- la figure 8 représente une vue en en coupe transversale du dispositif de dérivation, selon la ligne DD de la figure 7.

Le dispositif de dérivation illustré en exemple aux figures comprend une base 1 fixe de forme générale parallélépipédique. La base 1 comporte 2 blocs flancs 6 parallèles maintenus écartés verticalement par 2 parois représentées horizontalement.

Les deux flancs 6 sont prévus pour coopérer avec respectivement des tuyauteries d'entrée E et de sortie S d'un circuit de fluide et notamment de gaz (symbolisé par des flèches de circulation d'amont en aval).

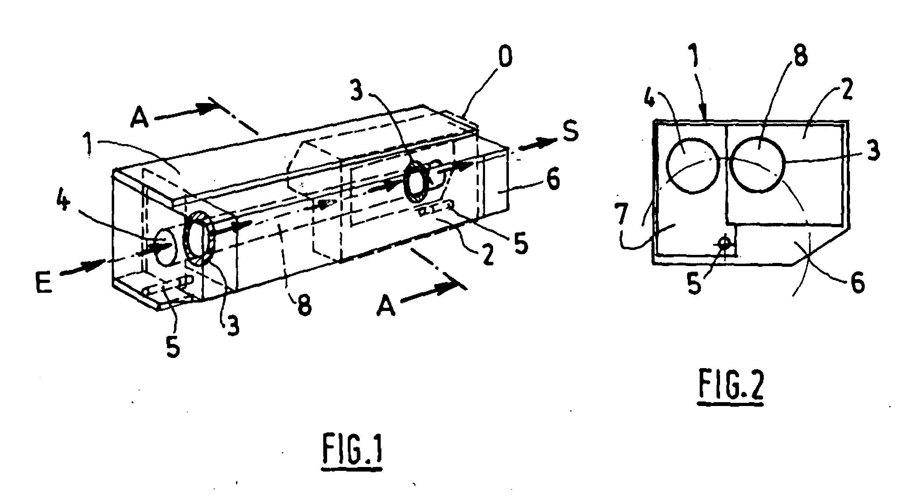

Le dispositif comporte un premier tube 8 de circulation de fluide associé à un organe de mesure 2 tel qu'un débitmètre par exemple. L'organe de mesure 2 est pourvu d'un afficheur de la grandeur physique mesurée, par exemple de façon digitale. Par soucis de simplification, l'afficheur 0 est représenté en pointillés et uniquement sur la figure 1.

Le dispositif comprend également un second tube 4 de circulation de fluide disposé entre les deux flancs 6. Le second tube 4, ou tube de dérivation, est disposé de façon sensiblement, parallèle au tube 8 pourvu de l'organe 2 de mesure 2.

Lorsque les extrémités du premier tube 8 pourvu de l'organe de mesure 2 coïncident respectivement avec les entrée et sortie de fluide, le second tube 4 est en position escamotée, c'est-à-dire sans communication fluidique avec les entrée E et sortie S de fluide. Dans la configuration des figures 1 et 2, le fluide qui entre dans le dispositif circule dans l'organe 2 de mesure au travers du premier tube 8.

L'étanchéité entre d'une part les entrée E et sortie S de fluide et, d'autre part, les extrémités du tube 8, est assurée par exemple par des joints 3 toriques (« O-ring ») montés respectivement sur les flancs 6.

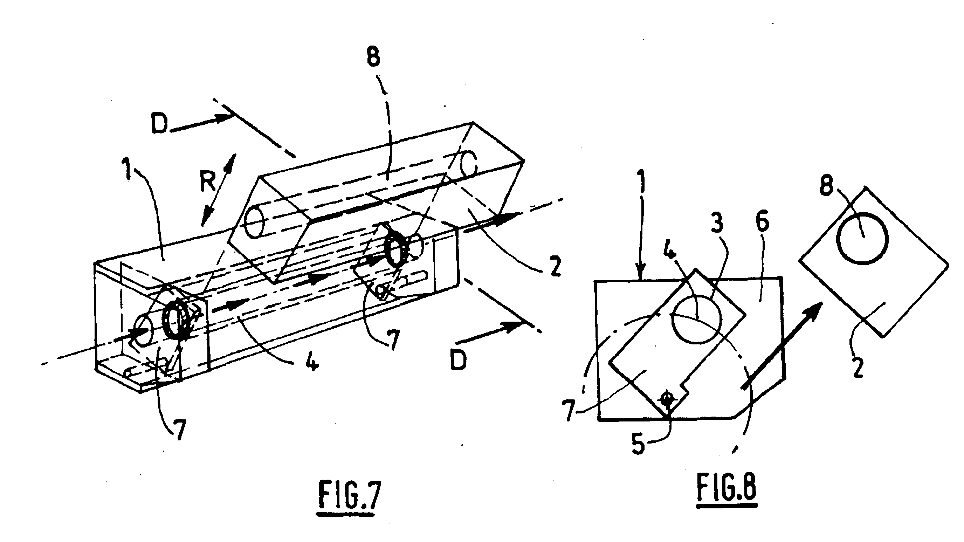

Les extrémités du second tube 4 sont fixées respectivement sur deux flasques 7 mobiles en rotation relativement aux flancs 6. Plus précisément, les deux flasques 7 sont montés rotatifs sur un axe de basculement 5 sensiblement parallèle à, l'axe, des tubes 4, 8 (cf. figure 7 notamment).

Le premier tube 8 est fixé de manière amovible sur le second tube 4 et/ou sur les flasques 7 mobiles. De cette façon, les deux tubes 4, 8 sont solidaires en rotation autour le l'axe de basculement 5.

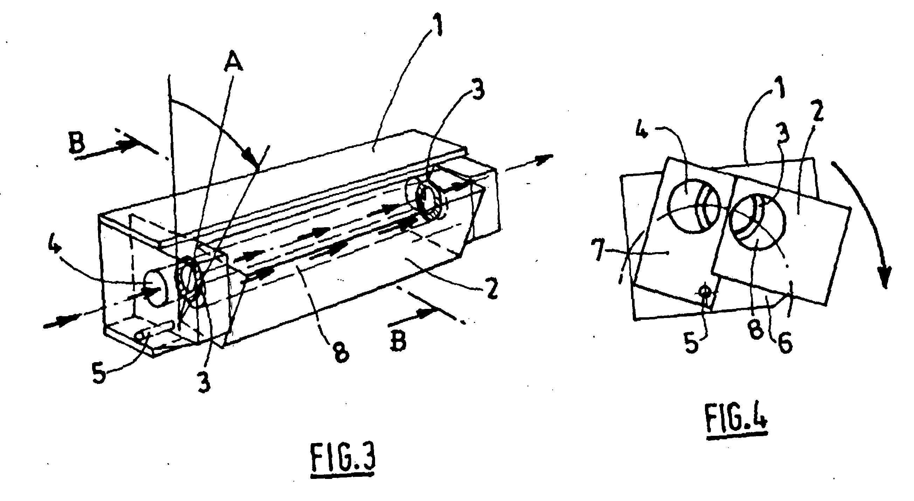

Le premier tube 8 est apte à être pivoté autour de l'axe de basculement 5. Lors sa rotation, le premier tube 8 entraîne avec lui en rotation le second tube 4 de dérivation (cf. figure 3, rotation d'un angle A). Ce basculement s'opère par exemple manuellement.

Les deux tubes 4, 8 sont disposés relativement de sorte que, durant le basculement, les extrémités des deux tubes 4, 8 sont reliés simultanément (sur une partie de leur surface) avec les orifices d'entrée E et de sortie S de fluide. Par exemple, les extrémités des deux tubes 4, 8 sont adjacentes et situées à égale distance de l'axe 5 de basculement. Dans cette position dite intermédiaire, le fluide transitant entre l'entrée E et la sortie S traverse à la fois le second tube 4 de dérivation et le premier 8 tube pourvu de l'organe de mesure 2 (cf. notamment figure 4).

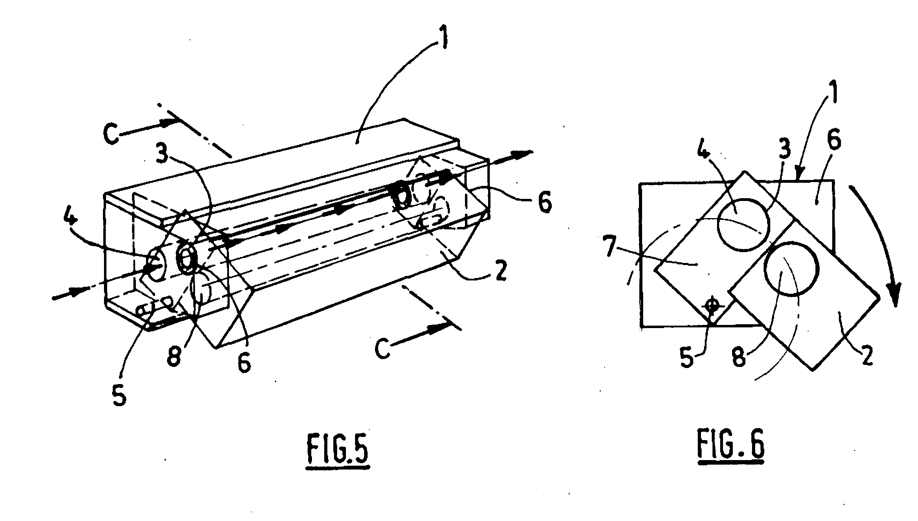

En fin de basculement (cf. figures 5 et 6), le second tube 4 de dérivation a pris la place du premier tube 8. Ainsi, le fluide transitant entre l'entrée E et la sortie S traverse uniquement ce second tube 4 de dérivation.

La transition entre les deux positions s'opère ainsi sans interruption du flux entre l'entrée E et la sortie S. Pendant le basculement, la surface de l'extrémité d'un tube en communication fluidique avec l'orifice correspondant croit tandis que, simultanément, la surface de l'extrémité de l'autre tube en communication fluidique avec l'orifice décroît.

Dans cette seconde position dans laquelle le fluide traverse uniquement le second tube 4 de dérivation, le premier tube 8 et/ou l'organe mesure 2 peut être détaché du dispositif pour être retiré en vue par exemple d'une opération de maintenance (cf. figures 7 et 8).

Avantageusement, le dispositif peut comporter un élément de verrouillage du dispositif dans les positions extrêmes (fluide circulant uniquement dans le premier tube 8 ou uniquement dans le second tube 4). De préférence l'organe de mesure 2 (ou le premier tube 8 tout entier) ne peut être retiré que lorsque le tube 4 de dérivation est verrouillé en position de dérivation (premier tube 8 ne communiquant pas avec le flux de fluide).

De même, par exemple, lorsque le premier tube 8 (organe de mesure 2) est en position de travail (en communication fluidique avec l'entrée et la sortie), l'ensemble ne peut être basculé qu'après action sur un organe de verrouillage amovible tel qu'un loquet, une vis ou analogue.

De plus, le système comporte de préférence un élément de maintien de sécurité empêchant l'extraction du premier tube 8 et de l'organe 2 de mesure tant que le second tube 4 de dérivation n'a pas pris totalement la place du premier tube 8.

Avantageusement, le basculement d'une position à l'autre peut être facilité par un léger retrait mécaniquement sollicité des joints 3 d'étanchéité. Cette action assurée par le mécanisme interne, libère une partie des contraintes du système et diminue les efforts nécessaires au basculement.

Pour réinstaller le premier tube 8 et son organe de mesure 2, il suffit de procéder aux opérations décrites ci-dessus, mais en ordre inverse. La mise en position du premier tube 8 et de son organe de mesure 2 provoque son verrouillage automatique dans cette position (cf. figure 1)

On conçoit donc aisément que, tout en étant de structure simple et peu coûteuse, le dispositif de dérivation selon l'invention permet de réaliser une dérivation sur une partie de circuit de fluide en toute sécurité. L'invention permet ainsi le retrait d'un organe ou l'intervention sur une portion de canalisation sans risque d'interrompre la continuité de fourniture de fluide. En effet, le dispositif de dérivation selon l'invention est conformé pour rendre impossible l'arrêt de l'écoulement du fluide.

En position de travail, l'organe de mesure 2 qui peut être un capteur de débit ou de pression voit passer le fluide dans ses conduits 8 internes. Toutefois, ce capteur 2 est monté sur un équipage mobile permettant son retrait de la veine de fluide. Au moment du retrait par un opérateur, un élément de tuyauterie 4 vient remplacer le tronçon 8 initialement représenté par le capteur. Le retrait du capteur 2 ne peut s'effectuer que si cet élément de tuyauterie 4 est parfaitement en place. Pendant la translation (rotation) de l'ensemble, le fluide continue à s'écouler au travers du système, ne subissant pas d'interruption.

## Revendications

1. Dispositif de dérivation pour circuit de fluide, notamment pour circuit de gaz, comprenant deux tronçons distincts (4, 8) de circulation de fluide pourvu chacun d'une extrémité amont et d'une extrémité aval, l'extrémité amont de chaque tronçon (4, 8) de circulation de fluide étant apte à être mise en communication fluidique avec une entrée (E) de fluide d'un circuit, l'extrémité aval de chaque tronçon (4, 8) étant apte à être mise en communication fluidique avec une sortie (S) de fluide d'un circuit, **caractérisé en ce que** chaque tronçon (4, 8) de circulation est monté mobile relativement à une base (1, 6) fixe entre une première position dans laquelle les extrémités amont et aval dudit tronçon (4, 8) sont en communication fluidique avec respectivement l'entrée (E) et la sortie (S) de fluide, et une seconde position escamotée dans laquelle les extrémités amont et aval dudit tronçon (4, 8) ne sont pas sont en communication fluidique avec respectivement l'entrée (E) et la sortie (S) de fluide, les deux tronçons (4, 8) de circulation étant liés par un élément de couplage de mouvement relativement à la base (1, 6) entre une première position de travail dans laquelle les extrémités amont et aval d'un premier tronçon (8) sont en communication fluidique avec respectivement l'entrée (E) et la sortie (S) de fluide, et une seconde position de dérivation dans laquelle les extrémités amont et aval du second tronçon (4) sont en communication fluidique avec respectivement l'entrée (E) et la sortie (S) de fluide, les deux tronçons (4, 8) sont agencés relativement à la base (1, 6) de sorte que, entre la position de travail et la position de dérivation, les deux tronçons (4, 8) passent par au moins une position intermédiaire dans laquelle les extrémités amont des deux tronçons (4, 8) sont simultanément en communication fluidique avec l'entrée (E) et les extrémités aval des deux tronçons (4, 8) sont simultanément en communication fluidique avec la sortie (S) de fluide, pour provoquer une dérivation du fluide d'un tronçon vers l'autre sans interruption du flux de fluide entre l'entrée (E) et la sortie (S).

2. Dispositif de dérivation selon la revendication 1, **caractérisé en ce qu'**il comporte un organe de maintien amovible, des tronçons (4, 8) en position de travail et/ou en position de dérivation tel qu'au moins un loquet ou une vis de maintien.

3. Dispositif de dérivation selon la revendication 1 ou 2, **caractérisé en ce que** les deux tronçons (4, 8) sont agencés relativement à la base (1, 6) de façon que le déplacement d'un tronçon (4, 8) depuis sa position de travail vers sa position escamotée provoque simultanément le déplacement du second tronçon (8, 4) depuis sa position escamotée vers sa position de travail et inversement.

4. Dispositif de dérivation selon l'une quelconque des revendications 1 à 3, **caractérisé en ce que** les tronçons (4, 8) sont montés mobile en rotation relativement à la base (1, 6).

5. Dispositif de dérivation selon l'une quelconque des revendications 1 à 4, **caractérisé en ce que** la base (1, 6) comprend deux flancs (6), les extrémités amont des deux tronçons (4, 8) étant connectées à un premier flanc (6), les extrémités aval des deux tronçons (4, 8) étant connectées au second flanc (6).

6. Dispositif de dérivation selon la revendication 5, **caractérisé en ce que** chaque flanc (6) comprend un orifice destiné à être connecté à une entrée (E), respectivement une sortie (S) d'un circuit de fluide, et des éléments (3) d'étanchéité tels qu'un joint torique destinés à assurer l'étanchéité entre l'orifice et les extrémités correspondantes des tronçons (4, 8).

7. Dispositif de dérivation selon l'une quelconque des revendication à 6, **caractérisé en ce que** l'un (8) au moins des tronçons comporte un appareillage (2) tel qu'un capteur de débit et/ou de pression apte à coopérer avec le flux de fluide traversant ledit tronçon (8).

8. Dispositif de dérivation selon l'une quelconque des revendications 1 à 7, **caractérisé en ce que** l'un au moins des tronçons (4, 8) est apte à être désolidarisé en vue de son retrait du dispositif.

9. Dispositif de dérivation selon la revendication 8, **caractérisé en ce que** la base (1, 6) et les tronçons (4, 8) sont conformés relativement de façon à empêcher la désolidarisation et le retrait d'un tronçon (4, 8) lorsque ledit tronçon (8) n'est pas en position escamotée.

10. Circuit de gaz, notamment d'oxygène, d'azote ou de protoxyde d'azote, **caractérisé en ce qu'**il comporte un dispositif de dérivation selon l'une quelconque des revendications précédentes.

## Claims

1. Bypass device for fluid line, particularly for a gas line, comprising two separate fluid flow segments (4, 8), each provided with an upstream end and a downstream end, the upstream end of each fluid flow segment (4, 8) being able to be placed in fluid communication with a fluid inlet (E) of a line, and the downstream end of each segment (4, 8) being able to be placed in fluid communication with a fluid outlet (S) of a line, said device being **characterized in that** each flow segment (4, 8) is mounted moveably relative to a fixed base (1, 6) between a first position in which the upstream and downstream ends of said segment (4, 8) are in fluid communication with the fluid inlet (E) and outlet (S), respectively, and a second or retracted position in which the upstream and downstream ends of said segment (4, 8) are not in fluid communication with the fluid inlet (E) and outlet (S), respectively, the two flow segments (4, 8) being connected by an element which couples their movement relative to the base (1, 6) between a first or working position in which the upstream and downstream ends of a first segment (8) are in fluid communication with the fluid inlet (E) and outlet (S) and a second bypass position in which the upstream and downstream ends of the second segment (4) are in fluid communication with the fluid inlet (E) and outlet (S), respectively, and the two segments (4, 8) are arranged relative to the base (1, 6) in such a way that, between the working position and the bypass position, the two segments (4, 8) pass through at least one intermediate position in which the upstream ends of the two segments (4, 8) are simultaneously in fluid communication with the inlet (E) and the downstream ends of the two segments (4, 8) are simultaneously in fluid communication with the fluid outlet (S), in order to bypass the fluid from one segment to the other without interrupting the flow of fluid between the inlet (E) and the outlet (S).

2. Bypass device according to Claim 1, **characterized in that** it comprises a removable retaining member for retaining the segments (4, 8) in the working position and/or in the bypass position, such as at least one retaining latch or screw.

3. Bypass device according to Claim 1 or 2, **characterized in that** the two segments (4, 8) are arranged relative to the base (1, 6) in such a way that moving one segment (4, 8) from its working position to its retracted position simultaneously moves the second segment (8, 4) from its retracted position to its working position and vice versa.

4. Bypass device according to any one of Claims 1 to 3, **characterized in that** the segments (4, 8) are mounted rotatably relative to the base (1, 6).

5. Bypass device according to any one of Claims 1 to 4, **characterized in that** the base (1, 6) comprises two end plates (6), the upstream ends of the two segments (4, 8) being connected to a first end plate (6) and the downstream ends of the two segments (4, 8) being connected to the second end plate (6).

6. Bypass device according to Claim 5, **characterized in that** each end plate (6) comprises an orifice designed to be connected to an inlet (E) or outlet (S) of a fluid line, and sealing elements (3) such as an 0-ring designed to create a seal between the orifice and the corresponding ends of the segments (4, 8).

7. Bypass device according to any one of Claims 1 to 6, **characterized in that** at least one (8) of the segments comprises an apparatus (2) such as a flowrate and/or pressure sensor able to interact with the flow of fluid passing through said segment (8).

8. Bypass device according to any one of Claims 1 to 7, **characterized in that** at least one of the segments (4, 8) is disconnectable to allow it to be removed from the device.

9. Bypass device according to Claim 8, **characterized in that** the base (1, 6) and the segments (4, 8) are relatively shaped in such a way as to prevent a segment (4, 8) from being disconnected and removed when said segment (8) is not in the retracted position.

10. Gas line, particularly for oxygen, nitrogen or nitrous oxide, **characterized in that** it comprises a bypass device according to any one of the preceding claims.

## Patentansprüche

1. Ableitungsvorrichtung für einen Fluidkreis, insbesondere für einen Gaskreis, der zwei verschiedene Fluidzirkulationsteilstücke (4, 8) enthält, die jeweils mit einem stromaufseitigen Ende und einem stromabseitigen Ende versehen sind, wobei das stromaufseitige Ende jedes Fluidzirkulationsteilstücks (4, 8) dazu ausgelegt ist, mit einem Fluideinlass (E) eines Kreises in eine Fluidkommunikation gebracht zu werden, während das stromabseitige Ende jedes Teilstücks (4, 8) dazu ausgelegt ist, mit einem Fluidauslass (S) eines Kreises in eine Fluidkommunikation gebracht zu werden, **dadurch gekennzeichnet, dass** jedes Zirkulationsteilstück (4, 8) relativ zu einer festen Basis (1, 6) beweglich zwischen einer ersten Position, in der das stromaufseitige Ende und das stromabseitige Ende des Teilstücks (4, 8) in einer Fluidkommunikation mit dem Fluideingang (E) bzw. dem Fluidausgang (S) stehen, und einer zweiten zurückgezogenen Position, in der das stromaufseitige Ende und das stromabseitige Ende (4, 8) nicht mit dem Fluideingang (E) bzw. mit dem Fluidausgang (S) in einer Fluidkommunikation stehen, montiert ist, wobei die beiden Zirkulationsteilstücke (4, 8) durch ein Kupplungselement für eine Bewegung relativ zu der Basis (1, 6) zwischen einer ersten Arbeitposition, in der das stromaufseitige Ende und das stromabseitige Ende eines ersten Teilstücks (8) mit dem Fluideingang (E) bzw. mit dem Fluidausgang (S) in einer Fluidkommunikation stehen, und einer zweiten Ableitungsposition, in der das stromaufseitige Ende und das stromabseitige Ende des zweiten Teilstücks (4) mit dem Fluideingang (E) bzw. mit dem Fluidausgang (S) in einer Fluidkommunikation stehen, verbunden sind, wobei die zwei Teilstücke (4, 8) relativ zu der Basis (1, 6) in der Weise angeordnet sind, dass sich die zwei Teilstücke (4, 8) zwischen der Arbeitsposition und der Ableitungsposition durch wenigstens eine Zwischenposition bewegen, in der die stromaufseitigen Enden der zwei Teilstücke (4, 8) gleichzeitig mit dem Eingang (E) in einer Fluidkommunikation stehen und die stromabseitigen Enden der zwei Teilstücke (4, 8) gleichzeitig mit dem Fluidausgang (S) in einer Fluidkommunikation stehen, um eine Ableitung von Fluid von einem Teilstück zum anderen ohne Strömungsunterbrechung von Fluid zwischen dem Eingang (E) und dem Ausgang (S) zu bewirken.

2. Ableitungsvorrichtung nach Anspruch 1, **dadurch gekennzeichnet, dass** sie ein Organ zum lösbaren Halten der Teilstücke (4, 8) in der Arbeitsposition und/oder in der Ableitungsposition, etwa wenigstens eine Klinke oder eine Halteschraube, enthält.

3. Ableitungsvorrichtung nach Anspruch 1 oder 2, **dadurch gekennzeichnet, dass** die zwei Teilstücke (4, 8) relativ zu der Basis (1, 6) in der Weise angeordnet sind, dass die Verlagerung eines Teilstücks (4, 8) aus seiner Arbeitsposition in seine zurückgezogene Position die Verlagerung des zweiten Teilstücks (8, 4) aus seiner zurückgezogenen Position in seine Arbeitsposition und umgekehrt hervorruft.

4. Ableitungsvorrichtung nach einem der Ansprüche 1 bis 3, **dadurch gekennzeichnet, dass** die Teilstücke (4, 8) relativ zu der Basis (1, 6) rotatorisch beweglich montiert sind.

5. Ableitungsvorrichtung nach einem der Ansprüche 1 bis 4, **dadurch gekennzeichnet, dass** die Basis (1, 6) zwei Seitenflächen (6) aufweist, wobei die stromaufseitigen Enden der zwei Teilstücke (4, 8) mit einer ersten Seitenfläche (6) verbunden sind und die stromabseitigen Enden der zwei Teilstücke (4, 8) mit der zweiten Seitenfläche (6) verbunden sind.

6. Ableitungsvorrichtung nach Anspruch 5, **dadurch gekennzeichnet, dass** jede Seitenfläche (6) eine Öffnung, die dazu bestimmt ist, mit einem Eingang (E) bzw. einem Ausgang (S) eines Fluidkreises verbunden zu werden, und Dichtungselemente (3) wie etwa eine torische Dichtung, die dazu bestimmt sind, die Dichtigkeit zwischen der Öffnung und den entsprechenden Enden der Teilstücke (4, 8) sicherzustellen, aufweist.

7. Ableitungsvorrichtung nach einem der Ansprüche 1 bis 6, **dadurch gekennzeichnet, dass** wenigstens eines (8) der Teilstücke eine Vorrichtung (2) wie etwa einen Mengendurchflusssensor und/oder einen Drucksensor enthält, die mit dem Fluidstrom durch das Teilstück (8) zusammenwirken können.

8. Ableitungsvorrichtung nach einem der Ansprüche 1 bis 7, **dadurch gekennzeichnet, dass** wenigstens eines der Teilstücke (4, 8) abgenommen werden kann, um es aus der Vorrichtung zu entnehmen.

9. Ableitungsvorrichtung nach Anspruch 8, **dadurch gekennzeichnet, dass** die Basis (1, 6) und die Teilstücke (4, 8) aneinander angepasst sind, derart, dass die Löslösung und die Entnahme eines Teilstücks (4, 8) verhindert wird, wenn das Teilstück (8) nicht in der zurückgezogenen Position ist.

10. Gaskreis, insbesondere Sauerstoff-, Stickstoff- oder Stickstoffoxid-Gaskreis, **dadurch gekennzeichnet, dass** er eine Ableitungsvorrichtung nach einem der vorhergehenden Ansprüche enthält.
